Europäisches Patentamt

European Patent Office

Office européen des brevets

(11) Publication number: **0 269 067**
**A2**

## (12) EUROPEAN PATENT APPLICATION

(21) Application number: 87117313.4

(22) Date of filing: 24.11.87

(51) Int. Cl.⁴: **H02K 21/00**

(30) Priority: 24.11.86 US 935377

(43) Date of publication of application:
01.06.88 Bulletin 88/22

(84) Designated Contracting States:
DE FR GB IT

(71) Applicant: SIMMONDS PRECISION PRODUCTS INC.
150 White Plains Road
Tarrytown New York 10591(US)

(72) Inventor: Sadvary, John W.
40 Notch Park Road
Little Falls New Jersey 07424(US)

(74) Representative: Wey, Hans-Heinrich, Dipl.-Ing.
Widenmayerstrasse 49
D-8000 München 22(DE)

(54) Regulatable permanent magnet alternator.

(57) The invention provides an improved alternator system in which a flux-linkage-modulating sleeve rotates with the rotor in the magnetic field between the stator and the rotor rotated by an engine-driven shaft, the sleeve being formed of alternating ferro-magnetic segments separated by nonmagnetic segments, the ferro-magnetic segments having the same angular separation as and being alignable with the poles of the stator, the angular relationship between the sleeve and the rotor being adjustable from a rotor-aligned position in which the ferro-magnetic segments are aligned with the poles of the rotor to a non-rotor-aligned position by the drag effect of a retarding assembly axially connected to one end of the sleeve and connected in a cranking relationship to the shaft by elastic connections that urge the sleeve into its rotor-alignment position during operation of the alternator, the drag effect of the retarding assembly being enhancable by an error signal developed in a voltage comparator as a function of the difference between a desired voltage output and the voltage produced by the alternator, thereby stretching the elastic connections and adjusting the sleeve into one of a continuous range of non-aligned positions, providing a more constant voltage output during load and speed variations.

FIG. 1

## REGULATABLE PERMANENT MAGNET ALTERNATOR

This invention relates to a regulatable permanent magnet alternator in which a flux-linkage-modulating sleeve, located between the rotor and the stator, is shiftable through 90 electrical degrees to regulate the output of the alternator.

U.S. Patent No. 4,027,229 describes an alternator includes a stator comprising an armature winding and a rotor providing a permanent magnet field. A sleeve is located between the rotor and stator and comprises on its periphery alternating ferro-magnetic and nonmagnetic segments. When the ferro-magnetic segments are aligned with the poles of the stator, the flux linkage between the rotor and stator is maximum. When the nonmagnetic segments are aligned with the stator poles, the flux linkage is a minimum. The sleeve is shiftable through 90 electrical degrees, with relation to the stator, by means of a motor, to change the reluctance of the flux paths between the poles of the rotor, and thus regulate the output of the alternator between its maximum and minimum values.

The alternator of the said U.S. Patent fails to provide continuous, automatic control of the angular position of the modulating sleeve, and therefore is unable to provide a substantially constant voltage output irrespective of load and speed variations that may affect the alternator during its operation.

According to the invention, a regulatable permanent magnet alternator alternator, including a fixed cylindrical stator having electromagnetic poles extending into the magnetic field produced by the poles of a rotor mounted on and rotated by an engine-driven shaft, and a flux-linkage-modulating cylindrical sleeve mounted between the rotor and stator, the stator and sleeve being approximately radially aligned and having a common axis with the rotor shaft, the sleeve being formed of alternating ferro-magnetic bridging segments separated by nonmagnetic segments, the ferro-magnetic segments having the same angular separation as and being alignable with the poles of the stator, and the sleeve being angularly shiftable through 90 electrical degrees to change the reluctance of the flux paths between the poles of the rotor and thus regulate the output of the alternator between maximum and minimum values, is characterized in that the the angular relationship between the sleeve and the rotor is adjustable from a rotor-aligned position in which the ferro-magnetic bridging segments are aligned with the poles of the rotor to a non-rotor-aligned position by the drag effect of a sleeve-retarding assembly rigidly connected to one end of the sleeve, the retarding assembly being axially mounted around the rotor shaft and connected in a cranking relationship to the shaft by elastic connections that cause the sleeve to rotate at the same angular rate as the rotor and tend to contract to continually urge the sleeve into its rotor-alignment position during operation of the alternator, the drag effect of the retarding assembly being magnetibly enhancable by an error signal developed in a voltage comparator as a function of the difference between a desired voltage output and the voltage produced by the alternator, thereby stretching the elastic connections and adjusting the sleeve into one of a continuous range of non-aligned positions.

The continuous, automatic adjustment of the angular position of the flux-linkage-modulating sleeve according to the invention provides a a substantially constant voltage output despite load and speed variations, while the concurrent rotor and sleeve rotation minimizes eddy current losses in the magnetic circuit and increases alternator efficiency. The alternator of the invention is estimated to provide a constant voltage for a 10:1 variation in either electrical load (in OHMS) or rotor angular velocity (revolutions per minute, RPM), or a combined 10:1 variation of electrical load and rotor angular velocity.

In the accompanying drawings, in which the same reference character refers to the same element in all the figures,

FIGURE 1 is a cross-sectional view of a regulatable permanent magnet alternator according to the invention showing a drag-inducing retarding motor assembly.

FIGURE 2 is a cross-sectional view at line 2-2 in FIGURE 1 of the mechanism for shifting the angular position of the sleeve in accordance with the present invention.

FIGURE 3 is a cross-sectional view of the alternator showing the sleeve in a position for maximum flux and maximum alternator output.

FIGURE 4 is a cross-sectional view of the alternator showing the sleeve in a position for minimum alternator output.

FIGURE 5 is a cross-sectional view of the alternator showing a drag-inducing eddy current damper assembly as an alternative to the drag-inducing retarding motor assembly of Figure 1.

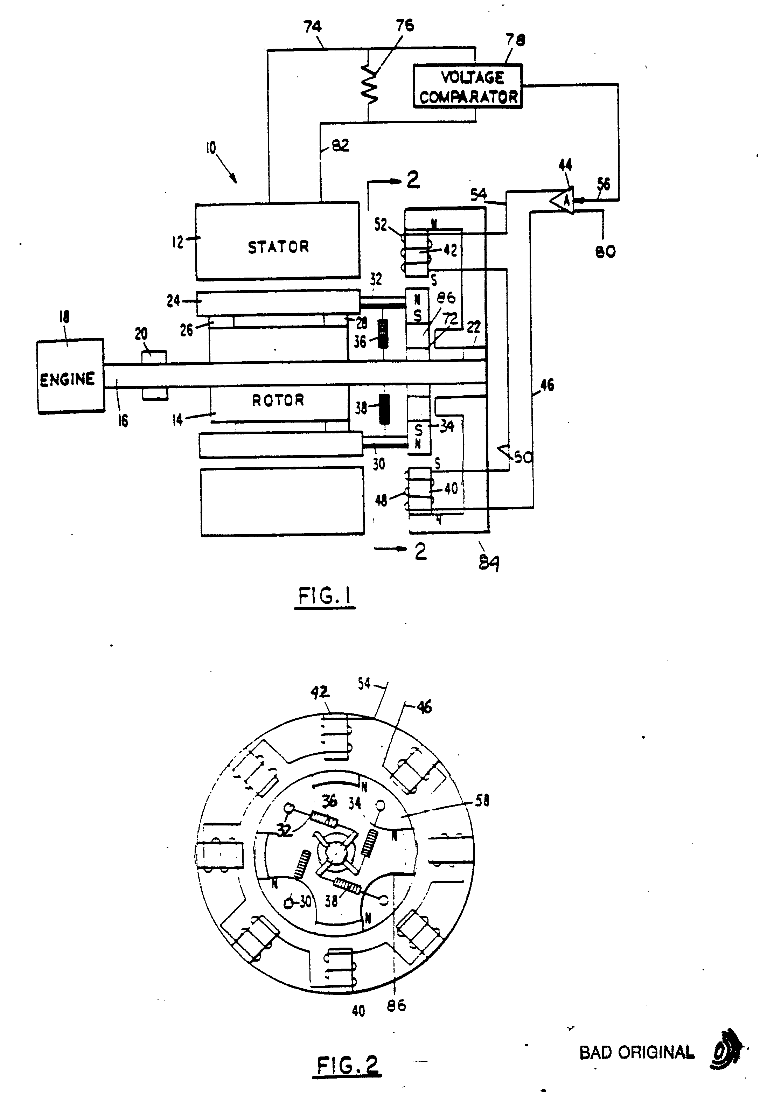

Preferably, according to the invention a drag-inducing retarding motor assembly embodiment of the invention is used, as shown in in FIGURES 1-4.

With particular reference to FIGURE 1, a regulatable permanent magnet alternator that uses drag from a retarding motor in accordance with the present invention is shown generally at 10. The regulatable permanent alternator 10 includes a stator 12 and a rotor 14. The rotor 14 is driven through shaft 16 by engine 18. The shaft 16 is supported by bearings 20 and 22. Sleeve 24 is supported for angular adjustment on rotor 14 through bearings 26 and 28.

The sleeve 24 is connected by bolt 30 and bolt 32 to the permanent magnet assembly 34, including mounting plate 58, that is the part of the sleeve retarding assembly that controls the adjustment of the sleeve. Mounting plate 58 is supported as an extension of the sleeve 24 by bearings 26 and 28 and is also supported by a bearing 72, to allow rotation of the permanent magnet assembly 34 around the shaft 16. The permanent magnet assembly 34 is connected in a cranking relationship to the surface of the shaft by springs forming elastic connections that cause the sleeve to rotate at the same angular rate as the rotor and tend to contract to continually urge the sleeve into its rotor-alignment position during operation of the alternator two of the springs are shown as 36 and 38 in Figure 1, respectively connected to bolts 30 and 32 and shaft 16.

A series-wired circle of electromagnetic poles of which opposite ones are shown as 40 and 42 is energized by coils 52 and is positioned on the stationary armature plate 84 (which supports shaft bearing 22) in the field of the permanent magnet assembly 34, so that any control current received from servo amplifier 44 through lines 46 and 54 will produce a magnetic attraction between the poles and the permanent magnets that will enhance the drag effect of the retarding assembly.

An error signal 56 may be delivered to the servo amplifier 44 from the voltage comparator 78. The error signal is produced as a function of any difference between the voltage developed by the alternator 10 and the desired voltage (which may be preselected). Lines 74 and 82 connect the alternator output to the electrical load 76 and the voltage comparator 78. The electrical load 76 may have variations in its impedance to permit pre-selection of the range of output variation desired. The source of dc voltage for operation of the servo amplifier 44 is represented by line 80. This dc current may be provided by an external source or derived from the rectified output of the alternator.

Because the direction of rotation of the rotor is against the tension of the springs (36, 37 etc.) connecting its shaft 16 to the retarding assembly, when the field produced by the the electromagnet poles (40, 42, etc ) attract the adjacent poles of the permanent magnets 34, this attraction increases the tension in the springs and shifts the position of the sleeve 24 into one of a continuous range of non-rotor-aligned positions, depending on the strength of the error signal, which in turn depends on the degree of undesired variation in alternator output.

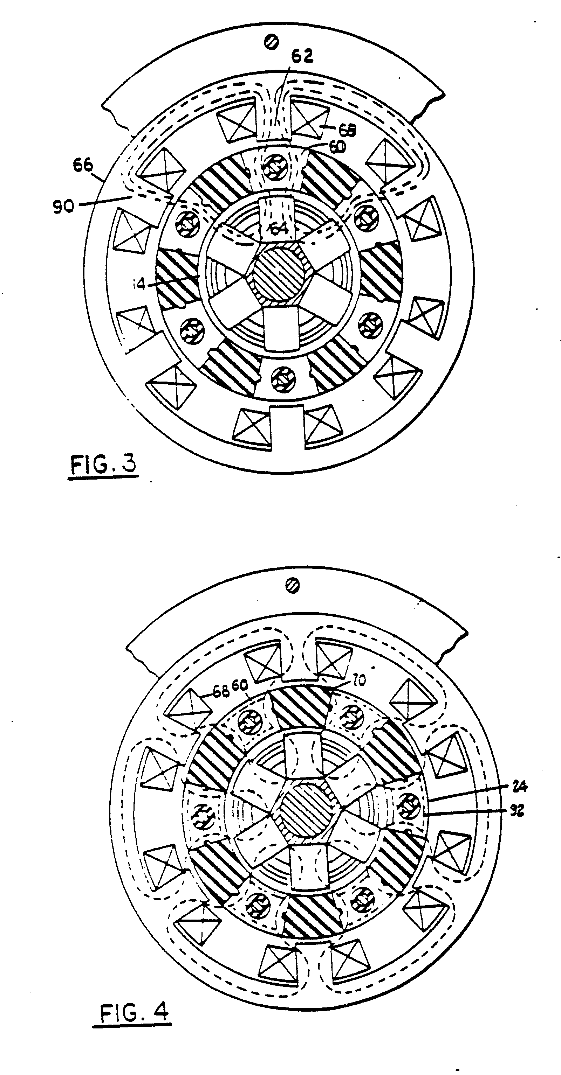

In FIGURE 3, the sleeve is shown in position for maximum flux and maximum alternator output, with the ferro-magnetic bridging segments 60 being aligned with the poles 62 of the stator. Consequently, the flux path of lowest reluctance 90 is from one permanent magnet pole 64 to the next is through the aligned bridging members 60, the pole 62, and the annulus 66. As the rotor turns, the rate of change of flux through the armature coils 68 is at a maximum and the alternator output is at its maximum.

When the sleeve 24 is moved to the annular position shown in FIGURE 4, the nonmagnetic segments 70 are aligned with the stator poles, and the flux path of lowest reluctance 92 from one permanent magnet pole to the next is through the bridging member 60. This minimum reluctance path shunts away most of the rotor flux from the rotor poles, so that as the rotor turns, the rate of change of flux through the armature coils 68 is at a minimum and the alternator output is at its minimum. Hence, the sleeve 24 need only rotate through 90 electrical degrees, i.e., an angle equal to half of the pole separation angle, in order to shift the alternator between its maximum output condition and its minimum output condition.

The error signal may be in response to a load change or a variation in the speed of the driving engine 18 and the shifting of the position of the sleeve of the rotor may be to a position further from that shown in FIGURE 3 to provide less additional output, and thus a more constant voltage. Similarly, the error signal may require the shifting of the position of the sleeve of the rotor to a position further from that shown in FIGURE 4 to provide more additional output, and thus a more constant voltage.

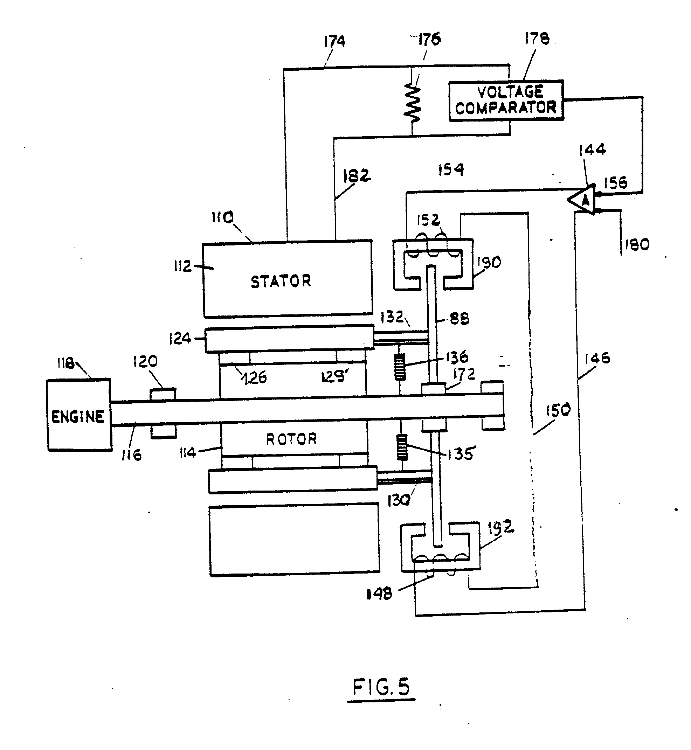

The retarding motor which is made up of permanent magnet assembly 34, electromagnets 40, and 42, coils 48, and 52, plate 58, bearing 72, stationary flux return path 84 and rotor return flux path 86 may be replaced by an eddy current damper as shown in FIGURE 5. This embodiment would be lower in cost than the embodiment of FIGURE 1.

With particular reference to FIGURE 5, an alternative embodiment of a regulatable permanent magnet alternator in accordance with the present invention using eddy current dampening is shown generally at 110. The regulatable permanent alternator 110 includes a stator 112 and a rotor 114. The rotor 114 is driven through shaft 116 by engine 118. The shaft 116 is supported by bearings 120 and 122. Sleeve 124 is supported by rotor 114 through bearings 126 and 128.

The sleeve 124 is connected by a series of bolts such as shown as 130 and 132 to electrically conducting disk 188. Bearing 172 allows rotation of disk 188 on shaft 16 in response to control current developed by amplifier 144 in electromagnets 190 and 192. The bolts 130, 132, etc. are connected to shaft 116 by springs 135, 136, etc. Electromagnets 190 and 192 are positioned adjacent to the disk 188. Electro-magnet 192 is connected to servo amplifier 144 by line 146. The coil 148 of electromagnet 192 is connected by line 150 to the coil 152 of electromagnet 190. The coil 152 of electromagnet 190 is connected by line 154 to servo amplifier 144. Servo amplifier 144 receives error signals through line 156 from voltage comparator 178.

Lines 174 and 182 connect the alternator output to the electrical load 176 and the voltage comparator 178. The load 176 may have impedance variations. An error signal is developed in the voltage comparator 178 as a function of the difference between the desired voltage and the voltage developed by the alternator 110. This error signal passes from comparator 178 to amplifier 144 through line 156. Line 180 represents a dc voltage that provides a source of current for operation of the servo amplifier 144. This dc current may be provided by an external source or derived from the rectified output of the alternator.

The conductive disk 188 has eddy currents induced in it that are dependent upon the magnetic flux developed by electromagnets 190 and 192 and the speed of the engine 118. Depending upon the magnetic flux induced in disk 188 by electromagnets 190 and 192, the circulating currents generate a drag or retarding torque. This retarding torque is equivalent to the drag of the retarding motor described above.

## Claims

1. A regulatable permanent magnet alternator, including a fixed cylindrical stator having electromagnetic poles extending into the magnetic field produced by the poles of a rotor mounted on and rotated by an engine-driven shaft, and a flux-linkage-modulating cylindrical sleeve mounted between the rotor and stator, the stator and sleeve being approximately radially aligned and having a common axis with the rotor shaft, the sleeve being formed of alternating ferro-magnetic bridging segments separated by nonmagnetic segments, the ferro-magnetic segments having the same angular separation as and being alignable with the poles of the stator, and the sleeve being angularly shiftable through 90 electrical degrees to change the reluctance of the flux paths between the poles of the rotor and thus regulate the output of the alternator between maximum and minimum values, characterized in that the angular relationship between the sleeve and the rotor is adjustable from a rotor-aligned position in which the ferro-magnetic bridging segments are aligned with the poles of the rotor to a non-rotor-aligned position by the drag effect of a sleeve-retarding assembly rigidly and axially connected to one end of the sleeve, the retarding assembly being axially mounted around the rotor shaft and connected in a cranking relationship to the shaft by elastic connections that cause the sleeve to rotate at the same angular rate as the rotor and tend to contract to continually urge the sleeve into its rotor-alignment position during operation of the alternator, the drag effect of the retarding assembly being magnetibly enhancable by an error signal developed in a voltage comparator as a function of the difference between a desired voltage output and the voltage produced by the alternator, thereby stretching the elastic connections and adjusting the sleeve into one of a continuous range of non-aligned positions.

2. An alternator as claimed in Claim 1, further characterized in that the sleeve-retarding assembly is a drag-inducing retarding motor comprising a series of electromagnetic field-producing armature poles responsive to the said difference between a desired voltage output and the voltage produced by the alternator and surrounding a permanent magnet assembly connected to the sleeve as part of the sleeve-retarding assembly.

3. An alternator as claimed in Claim 1 or 2, further characterized in that the sleeve-retarding assembly is a drag-inducing eddy-current damper comprising a conductive disk connected to the sleeve as part of the sleeve-retarding assembly and rotating between electromagnets producing a field responsive to the said difference between a desired voltage output and the voltage produced by the alternator.

FIG.1

FIG.2

BAD ORIGINAL

0 269 067

FIG. 3

FIG. 4

FIG.5